# EUROPEAN PATENT SPECIFICATION

(11) **EP 2 912 355 B1**
(45) Date of publication and mention of the grant of the patent: **12.10.2016**
(21) Application number: 13801735.5
(22) Date of filing: 16.09.2013
(51) Int. Cl.: F16K 27/02, F04D 29/42, F16K 1/20, F04D 15/00, F16K 1/24

(54) **EXTRACTABLE VALVE GROUP WITH IMPROVED OBTURATOR**
HERAUSZIEHBARE VENTILGRUPPE MIT VERBESSERTEM OBTURATOR
GROUPE SOUPAPE EXTRACTIBLE AVEC OBTURATEUR AMÉLIORÉ

(30) Priority: 29.10.2012 IT BS20120153
(43) Date of publication of application: 02.09.2015
(60) Divisional application: 15200547.6
(73) Proprietor: Industrie Saleri Italo S.P.A., 25065 Lumezzane, Brescia (IT)
(72) Inventor: RAVELLI, Alessandro, I-25065 Lumezzane Brescia (IT)
(74) Representative: Pulieri, Gianluca Antonio
(86) International application number: PCT/IB2013/058583
(87) International publication number: WO 2014/068417

(56) References cited:
- WO-A1-2011/068452
- WO-A1-2011/095907
- BE-A- 456 098
- US-A1- 2007 235 679

## Description

The present invention relates to a valve group for a pump of a cooling circuit, in particular for vehicles, such as motor vehicles or motor cycles.

It is well known how the cooling pump and the components which compose it are the most important elements inside the cooling circuit for thermic engines, especially in the vehicles sector. Great attention is therefore paid to the correct design of such components and to the continual improvement of their performance.

Examples of cooling pumps are illustrated in the documents EP-A1-1503083, PCT/IT2009/000269, PCT/IB2011/050256 in the name of the Applicant.

In particular, within the sphere of the documents PCT/IT2009/000269, PCT/IB2011/050256, the obturator positioned downstream of the rotor assumes an essential role; moreover, within the sphere of the document PCT/IB2011/050256 the fact that the valve group is in the form of an extractable cartridge from the pump also acquires particular importance.

Said embodiments, typical of the prior art, are flawed by the main drawback of not efficiently obstructing the passage of cooling liquid, which thus often leaks and finds a passage even when not desired.

The purpose of the present invention is to make a valve group comprising an obturator, particularly suitable for use in the sphere of a cooling pump, minimising to the point of eliminating the undesirable transit of cooling liquid.

Such purpose is achieved by a valve group made according to claim 1.

The characteristics and advantages of the valve group according to the present invention will be evident from the description given below, by way of a nonlimiting example, according to the appended drawings, wherein:

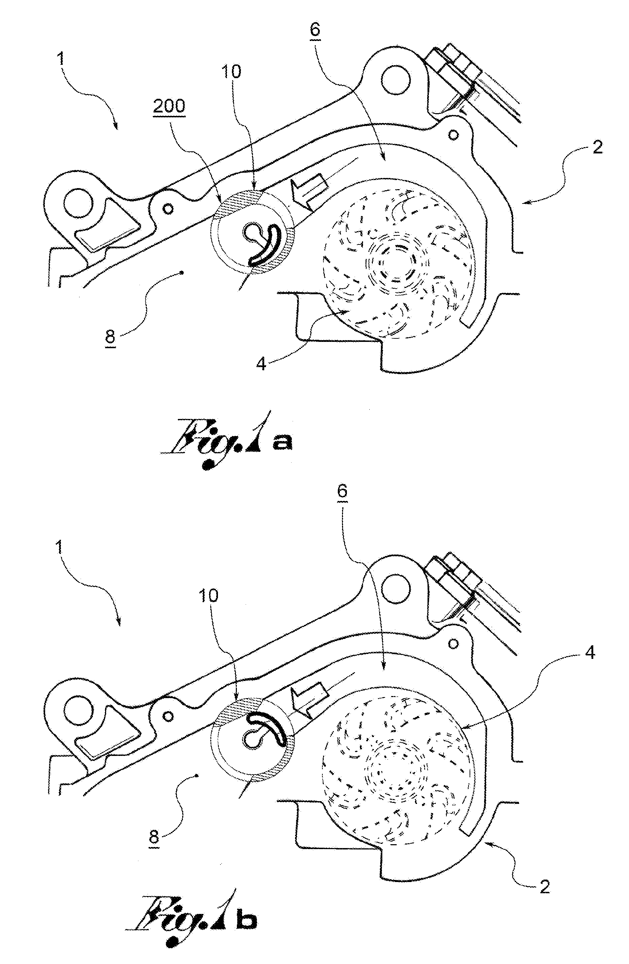

- figures 1a and 1b show a schematic view of a cooling pump comprising the valve group according to the present invention, according to one embodiment, respectively in an open configuration and in a closed configuration;
- figures 2a and 2b show two axonometric views of the valve group according to the present invention, in a first embodiment, respectively in an open configuration and a closed configuration;

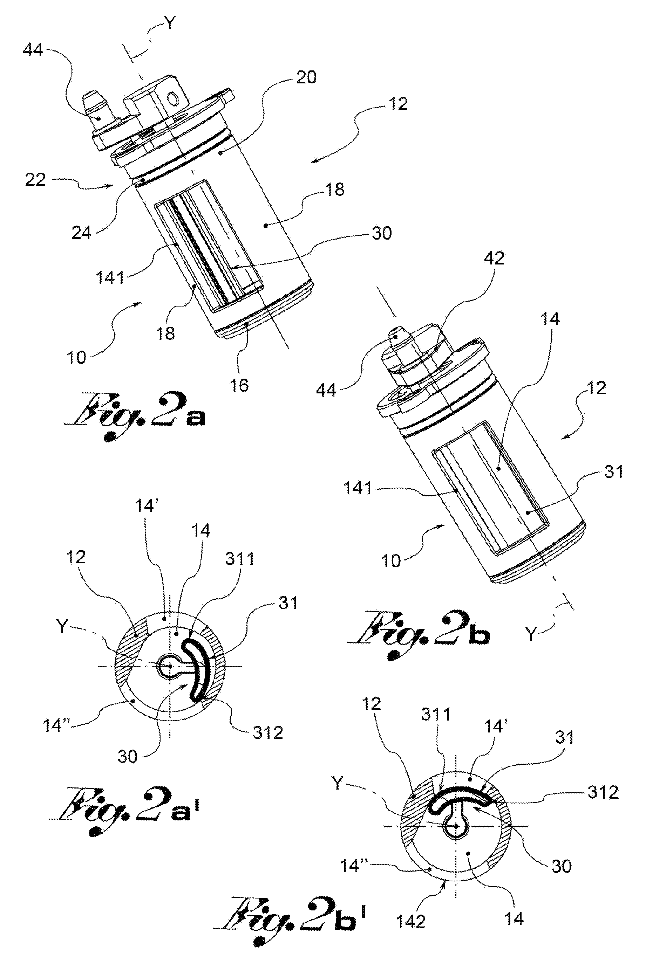

- figures 2a' and 2b' respectively show cross-section views along a transversal plane of the valve group in figures 2a and 2b;

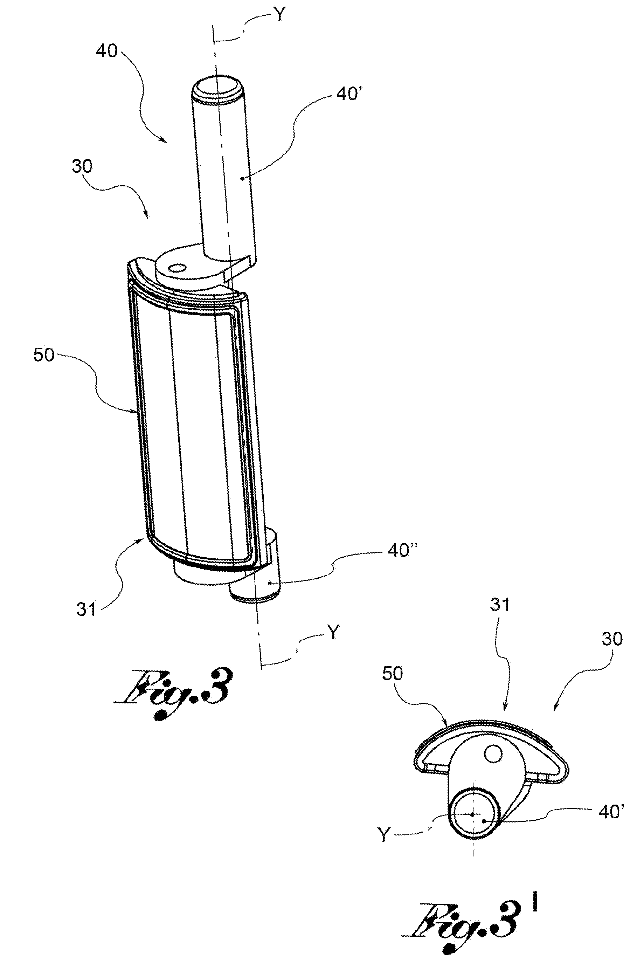

- figures 3 and 3' shows two views, respectively a perspective view and a view from above, of an embodiment of the obturator of the valve group which the present invention relates to;

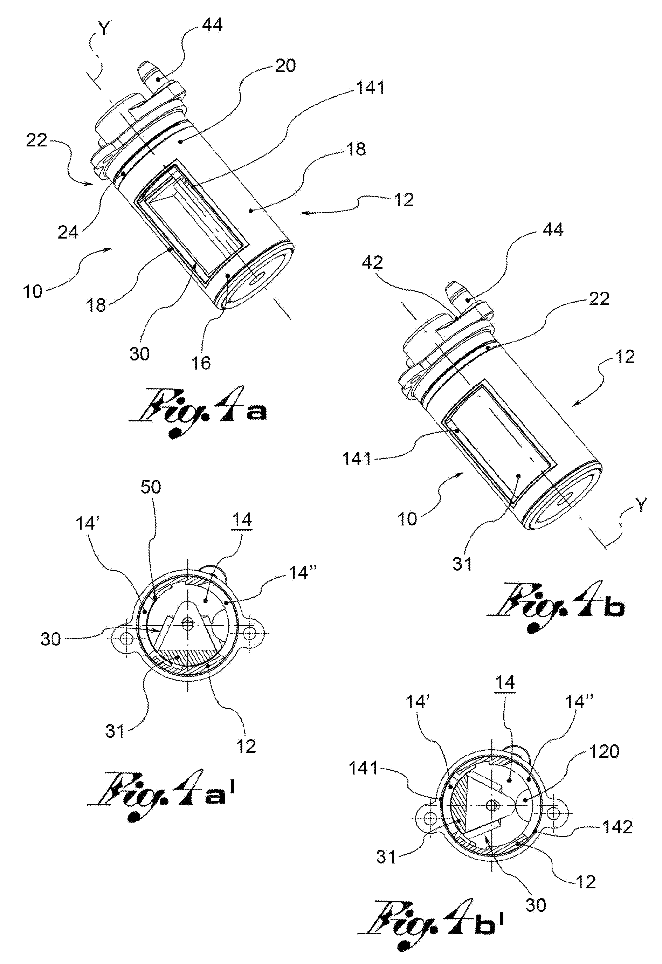

- figures 4a and 4b show two axonometric views of a valve group according to the present invention, in a second embodiment, respectively in an open configuration and a closed configuration;
- figures 4a' and 4b' respectively show cross-section views along a transversal plane of the valve group in figure 4a and 4b;

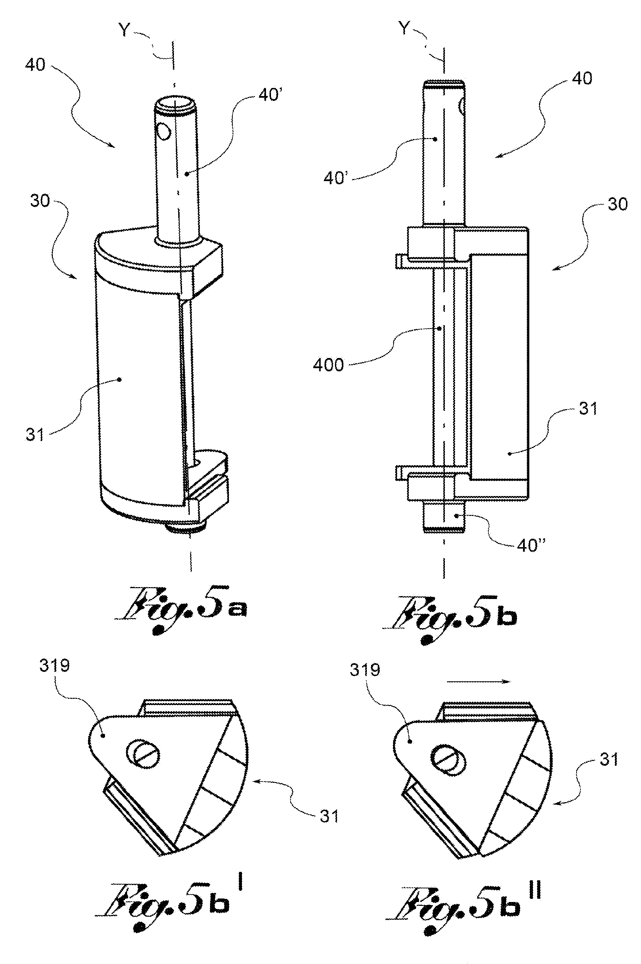

- figures 5a, 5b, 5b' and 5b" respectively show a perspective view, a side view, and two cross-section views according to a transversal plane showing two positions of the active portion, of the obturator of the valve group as in figures 4a, 4b and 4a' and 4b';

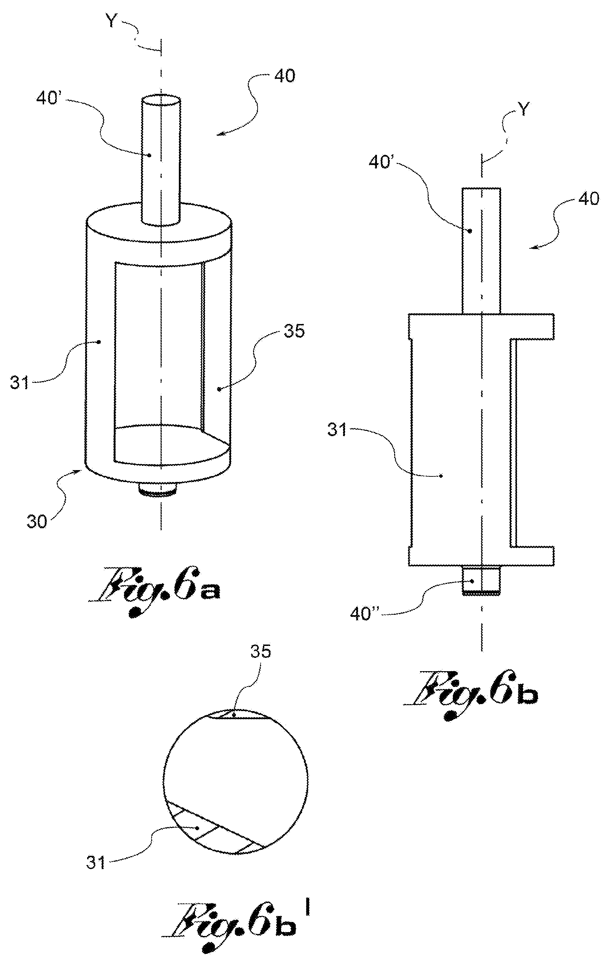

- figures 6a, 6b and 6b' respectively show a perspective view, a side view, and a cross-section view according to a transversal plane, of the obturator in yet a further embodiment;

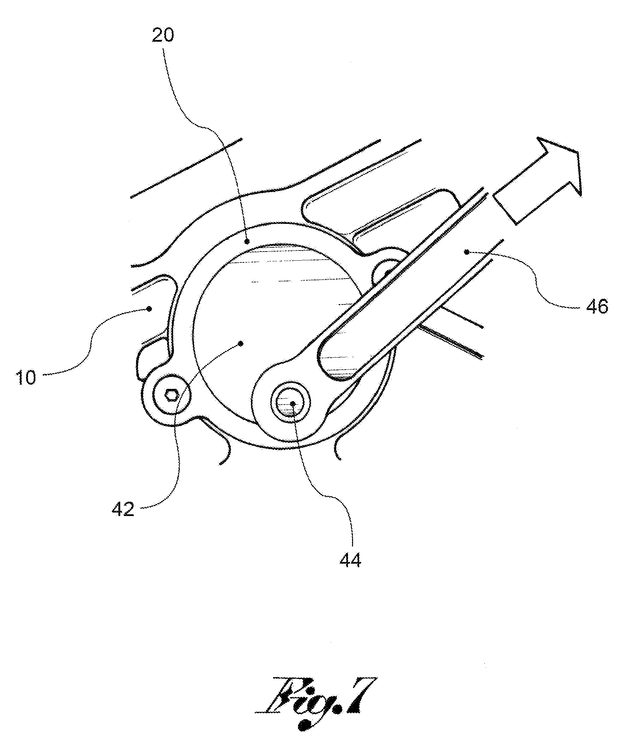

- figure 7 shows a detail of the pump containing the valve group according to the present invention.

According to one embodiment of the present invention, reference numeral 1 globally denotes a pump for a cooling circuit, in particular for vehicles, comprising a pump body 2 and a rotor 4 housed in the pump body 2, for example having a substantially circular shape. Preferably, the pump 1 is mechanically operated.

The pump body 2 is connectable to the cooling circuit of the motor, and in particular is connectable to a section of suction circuit, upstream, from which the liquid is aspirated, and a delivery section of circuit, downstream, to which the pressurised liquid is fed, towards the motor.

The rotor 4, placed in rotation around a rotor rotation axis, is suitable for aspirating the liquid from the suction section and sending it in pressurised form to the delivery section.

Downstream of the rotor, the pump body 2 has a delivery chamber 6, preferably having a volute profile, and a delivery duct 8, which extends from the delivery chamber 6. The delivery chamber 6 and the delivery duct 8 have not any further openings towards further ducts, except for the opening of the delivery duct towards the downstream section of the cooling circuit.

In a preferred embodiment, the pump 1 comprises a valve group 10, to limit on command the passage of the liquid from the delivery chamber 6 to the delivery duct 8.

In particular the valve group 10 is suitable for being positioned in an open configuration, in which the transit of liquid is permitted and in a closed configuration in which it obstructs the passage from the delivery chamber 6 to the delivery duct 8, limiting or preferably eliminating or preventing the transit of liquid from the delivery chamber 6 to the delivery duct 8. In other words, when the valve group 10 is in the closed configuration, the delivery chamber 6 is closed and the liquid remains inside it, stirred by the rotor in rotation.

In an open configuration, the valve group 10 permits the transit of a predefined quantity of liquid from the delivery chamber 6 to the delivery duct 8. Preferably, in a configuration of maximum aperture, the valve group 10 permits the transit of the greatest quantity possible of cooling liquid.

According to the present invention, the pump body 2 has a housing compartment 200 and the valve group 10 is insertable in the housing compartment and extractable therefrom, being provided with a cartridge structure.

In particular, the valve group 10 comprises a valve body 12, formed of an element elongated along a rotation axis Y-Y, preferably of a cylindrical shape, provided with a through duct 14. In other words, the valve group 10 is structured so as to delimit by its presence a passage through which the cooling liquid is suitable to flow.

In a preferred embodiment, the duct 14 is delimited by a plate 16 on the bottom,, by side walls 18, projecting axially from the plate 16, internally moulded so as to facilitate the flow of cooling liquid therein, for example by means of the Venturi effect, and by a tubular head 20 which surmounts and joins the side walls 18 on the side opposite the plate 16.

In a preferred embodiment, the duct 14 has in addition, at least one access mouth 14' through which the cooling liquid accesses the inside of the valve group 10 and at least one exit mouth 14" through which the cooling liquid exits from the valve group 10. Preferably, the at least one access mouth 14' and the at least one exit mouth 14" are respectively delimited by an access rim 141 and an exit rim 142.

In one embodiment, the valve body 12 is made in a single piece; in further embodiments, the valve body 12 is made in two reciprocally engageable parts.

Preferably, the valve body 12 is provided with external seals, for example in the form of beads 22 housed in grooves provided on the outer surfaces of the side wall 18, and/or in the form of an O-ring 24 housed in a groove provided externally to the head 20 or to the plate 16.

In a preferred embodiment, the valve group 10 comprises an obturator 30 housed in the duct 14 of the valve body 12 so as to swivel around the rotation axis Y-Y, so as to obstruct, in a closed position, the passage of liquid through the duct 14.

Preferably, the obturator 30 comprises an active portion 31 rotating in an offset manner in relation to the rotation axis Y-Y, suitable for assuming an open position in which it permits the passage of the liquid and a closed position in which obstructs the passage.

In particular, the active portion 31 is suitable to sealingly engage the valve body 12 so as to stop the passage of the cooling liquid. Preferably, in fact, the active portion 31 is suitable to engage the at least one access mouth 14' or the at least one exit mouth 14" so as to prevent the passage of cooling liquid between the delivery chamber 6 and delivery duct 8. Preferably, the active portion 31 is suitable to engage the at least one access mouth 14', thus blocking the flow of cooling liquid inside the duct 14.

Preferably, said sealed engagement between the active portion 31 and valve body 12 is achieved by means of a gasket 50, comprised in the valve group 12.

In a preferred embodiment, said gasket 50 is placed on the obturator 30 and in particular on the active portion 31 thereof. For example, said gasket 50 is fitted on the obturator 30, in particular on the active portion 31 thereof. Or again, in a further embodiment said gasket 50 is heat welded on to the obturator 30, specifically on the active portion 31 thereof; in some embodiments the active portion 31 comprises special hollows 310 suitable to contain a part of said gasket 50 so that it remains in position over time even after numerous functioning cycles.

In a further embodiment said gasket 50 is instead placed inside the valve body 12 towards the inside of the duct 14, preferably, at the access mouth 14' and/or the exit mouth 14", specifically, at the access rim 141 and/or the exit rim 142.

According to the embodiments described above, the shapes of the obturator 30, of the active portion 31, just as that of the duct 14 and specifically that of the at least one access mouth 14' and/or of the at least one exit mouth 14" are designed so as to favour said reciprocal engagement of the parts. For example the active portion 31 is a substantially complementary shape to the at least one access mouth 14' or the at least one exit mouth 14". Preferably, the active portion 31 has greater dimensions than the free transit space of the at least one access mouth 14' or of the at least one exit mouth 14", so that when positioned in front of one of them it prevents the passage of liquid. In other words, the obturator 31 has dimensions such as to guarantee engagement with the valve group 12 and the relative gasket 50.

Preferably, when rotated into the open position, the active portion 31 is positioned in such a way as to favour the movement of the cooling liquid, for example exploiting the Venturi effect.

In addition, in a preferred embodiment, the active portion 31 has a variable cross-section, so as not to influence, when placed in the open position, the flow of cooling liquid inside the duct 14. In other words, cross-sectioning the obturator 30 by means of a transversal plane, perpendicular to the rotation axis Y-Y, the active portion has a variable shape. The active portion 31 in fact identifies, preferably substantially parallel to the rotation axis Y-Y, a high rim 311 and a sharp rim 312, wherein the high rim 311 has a greater thickness than the sharp rim 312. In an open configuration, the sharp rim 312 is placed near the exit of the duct 14, next to the exit mouth 14", thus favouring the flow of cooling liquid.

In addition, said active portion 31 as well as being rotatable is offset in relation to the rotation axis Y-Y, in some embodiments, even radially movable.

In other words, for example in the embodiment shown in figures 4a, 4b, 4a', 4b', 5a, 5b, 5b' and 5b" the active portion 31 is moved radially, when the obturator 30 is entirely rotated between the open and closed position.

Specifically, in fact, during the rotation of the obturator 30 around the rotation axis Y-Y the active portion 31 is moved radially so as to be brought closer to the access moth 14' or to the exit mouth 14", to be obstructed. In particular, if the gasket 50 is fitted to the valve body 12, the active portion 31 is thus moved towards the gasket 50 so as to improve the reciprocal engagement of the components and obtain the seal desired.

In a preferred embodiment, said movement is achieved by means of a cam body 120 made on the valve body 12 which is suitable to engage said active portion 31. Preferably, the active portion 31, on the side opposite the surface acting on the access mouth 14' or on the exit mouth 14" comprises a control portion 319 suitable for interacting with the cam body 120.

Preferably, both the cam body 120 and the control portion 319 are an arched shape. Preferably, two cam bodies 120 are present, positioned near the head 20 and plate 16; preferably, the obturator 30 comprises two control portions 319 suitable for interacting with the cam bodies 120.

In a further embodiment, such as that shown in figures 6a, 6b and 6b', the obturator 30 is a substantially cylindrical shape; the obturator 30 has a secondary duct 145 inside it, delimited by the active portion 31, in the shape of a circular sector wall, and by a support wall 35, opposite the active portion 31.

In the closed position of the obturator 30 the active portion 31 is positioned in front of the access mouth 14' or the exit mouth 14", preventing the passage of fluid. In the open position of the obturator 30, the secondary duct 145 is positioned in the same direction as the duct 14 of the valve body 12, so as to thus permit the passage of cooling liquid in both ducts.

In addition, the pump 1 comprises actuation means suitable for acting on the valve group 12 and in particular on the obturator 30 to move it from the closed position to the open position and vice versa.

According to a preferred embodiment, the valve group 10 further comprises movement means suitable for permitting said interaction between the obturator 30 and actuation means. Said movement means comprise a shaft 40 having its main extension along the rotation axis Y-Y, connected to the obturator 30.

Some embodiments provide that the shaft 40 axially crosses the obturator 30 and engages with the plate 16 and with the head 20, for the swivelling support of the obturator 30. The shaft 40 in addition projects axially externally from the head 20 of the valve body 12.

Or in other embodiments, the shaft 40 is divided into two main components both connected to the obturator 30: a head end 40' and a bottom end 40"; the head end 40' is suitable for engaging with the plate 16 and the bottom end 40" with the head 20; in said embodiments internally there is therefore no shaft occupying space or influencing the flow of the cooling liquid.

Or again in a further embodiments the movement means comprise a reinforcement spindle 400 which joins the head end 40' and the bottom end 40" so as to stiffen the obturator component 30 and avoid the risk of structural bending or collapse during the life span thereof. Said spindle 400 preferably has a smaller diameter than that of the shaft 40.

Preferably, moreover, the movement means comprise a disc 42 connected to the shaft 40, in particular to the portion of it projecting from the head 20, and a pin 44, connected to the disc 42 in an eccentric position in relation to the rotation axis Y-Y.

Preferably, the actuation means comprise a rod 46, provided on command, with translatory movement, connected to the pin 44 so as to swivel.

According to one embodiment variant, the rod is connected to an actuator, for example a vacuum actuator, an electromagnetic actuator, a hydraulic or pneumatic actuator, an electric actuator or the like.

The translation of the rod 46 thus determines the rotation of the obturator 30.

According to a preferred embodiment, moreover, the valve group comprises an oil retainer element, inserted on the shaft 40.

In addition, the pump 1 comprises detection means suitable for detecting a functioning condition of the vehicle, for example heat detection means suitable for detecting the temperature of the cooling liquid or the temperature of the engine parts. Said actuation means are operatively connected to the detection means to regulate the aperture of the obturator.

Preferably, the heat detection means detect the temperature of the engine parts and transmit such information to the actuation means which, as long as the engine is cold, keep the obturator in the closed configuration. Progressively, as the temperature of the engine increases or according to a predefined function, the actuation means bring the obturator into the open configuration.

Innovatively, the valve group which the present invention relates to and the cooling pump which contains it, are particularly suitable for use in the sphere of a cooling system of a vehicle,

Advantageously, the valve group obstructs the passage of cooling liquid in an efficacious manner; in particular, the valve group ensures a good seal, specifically in the reciprocal engagement of the obturator and valve body, minimising to the point of eliminating, leakage phenomena and the unwanted transit of cooling liquid therein.

In addition, advantageously, the cooling liquid in movement, moved by the rotor, helps the sealed engagement between the obturator and valve body. Preferably, such situation arises in particular when the obturator obstructs the entrance in the duct by positioning itself on the access mouth, in that both in the case in which the gasket is placed on the obturator and in the case in which it is placed on the valve body, the liquid presses on it, thereby improving the seal.

According to a further advantageous aspect, in the embodiment in which the active portion is radially mobile, the sealing effect is further enhanced thanks to said further movement.

Advantageously, the obturator group is suitable not to influence the movement of the cooling liquid in transit, occupying a limited quantity of space inside the duct, centrally, and having the active portion located offset from the rotation axis and positioned at the periphery of the cooling duct. Thanks to such arrangement of the obturator group the liquid flows in the duct without obstruction.

According to a further advantageous aspect, the valve group, and in particular the duct and the obturator group have a cross-section geometry such as to favour the flow of cooling liquid, exploiting for example the Venturi effect.

Advantageously, extremely efficient sealing is achieved, and thus excellent control results of the passage of the cooling liquid, even with a valve group insertable in the form of a cartridge, extractable from the pump body and thus replaceable.

It is clear that a person skilled in the art may make modifications to the valve group and to the pump described above so as to satisfy contingent requirements, all contained within the scope of protection as defined by the following claims.

## Claims

1. Valve group (10) housable in extractable manner in a housing compartment (200) of a pump body (2) of a pump (1) of a vehicle cooling circuit, wherein the valve group (10) has a closed configuration in which the transit of the cooling liquid is prevented, and comprises a valve body (12), formed of an element elongated along a rotation axis (Y-Y), fitted with a through duct (14), and an obturator (30), housed in said duct (14), rotating around said rotation axis (Y-Y), wherein the obturator comprises an active portion (31) rotating in an offset manner in relation to said rotation axis (Y-Y) and suitable for obstructing, in a closed position, the passage of liquid through the duct (14).

2. Valve group (10) according to claim 1, wherein the active portion (31) is suitable to sealingly engage the valve body (12) so as to stop the passage of the cooling liquid.

3. Valve group (10) according to claim 2, wherein the valve group (10) comprises a gasket (50) suitable for forming a seal between the active portion (31) and the valve body (12).

4. Valve group (10) according to claim 3, wherein said gasket (50) is fitted on said active portion (31) of the obturator (30).

5. Valve group (10) according to claim 3, wherein said gasket (50) is positioned on the valve body (12), towards the inside of the duct (14).

6. Valve group (10) according to any of the previous claims, wherein the valve body (12) comprises a plate (16) on the bottom, side walls (18), projecting axially from the plate (16), and a tubular head (20), which surmounts and joins the side walls (18) on the side opposite the plate (16), between said side walls (18) the duct (14) being defined, with at least one entrance mouth (14') through which the cooling liquid accesses the inside of the valve body (12), and at least one exit mouth (14") through which the cooling liquid exits from the inside of the valve body (12), wherein the obturator (30), in the closed position, is positioned in the vicinity of the at least one access mouth (14') or of the at least one exit mouth (14").

7. Valve group (10) according to claim 6, wherein the access mouth (14') and the exit mouth (14") are respectively delimited by an access rim (141) and an exit rim (142), wherein the active portion (31) is suitable, in the closed configuration for engaging one of said access (141) or exit (142) rims.

8. Valve group (10) according to any of the claims 6 or 7, wherein the active portion (31) of the obturator (30) has a substantially complementary shape to that of the respective access mouth (14') or exit mouth (14") with which it engages.

9. Valve group (10) according to any of the previous claims, wherein the active portion (31) of the obturator (30) has a transversal cross-section perpendicular to the rotation axis (Y-Y), of varying thickness, identifying a high rim (311) and a sharp rim (312), wherein the high rim (311) has a greater thickness than the sharp rim (312).

10. Valve group (10) according to any of the previous claims, further comprising movement means, for moving the obturator (30), which comprise a shaft (40) connected to the obturator (30), a pin (44), eccentrically connected to the shaft (40), for example positioned on a disc (42), fixed on said shaft (40).

11. Pump (1) for a cooling circuit, in particular for vehicles, comprising a pump body (2) and a rotor (4) which aspirates cooling liquid through an aspiration section and sends said cooling liquid under pressure to a delivery section;
wherein in the pump body (2) are made a delivery chamber (6), placed downstream of the rotor (4), and a delivery duct (8) connected to the delivery chamber (6), connectable to the delivery section of the cooling circuit, comprising a valve group (10) according to any of the previous claims, wherein the housing compartment (200), containing said valve group (10), is positioned between said delivery chamber and said delivery duct (8).

12. Pump (1) according to claim 11, comprising actuation means suitable for acting on the obturator (30), comprised in the valve group (10), to take it from the closed position to the open position, in which it permits the passage of cooling liquid, and vice versa.

13. Pump (1) according to claim 12, comprising a valve group according to claim 10, wherein the actuation means comprise a rod (46) translatable on command, for example by means of an actuator, connected to the pin (44) in a swivelling manner, so as to move said pin (44) along its eccentric trajectory.

14. Pump (1) according to claim 8, comprising detector means suitable for detecting a functioning condition of the vehicle, for example heat detection means suitable for detecting the temperature of the cooling liquid or the temperature of the engine parts, operatively connected to the actuation means which, depending on what is detected by the detection means, move the obturator (30).

## Patentansprüche

1. Eine Ventilgruppe (10), die auf herausziehbare Weise in einem Aufnahmeraum (200) eines Pumpenkörpers (2) einer Pumpe (1) eines Kühlkreislaufs eines Fahrzeugs aufnehmbar ist, wobei die Ventilgruppe (10) eine geschlossene Konfiguration aufweist, bei der der Durchfluss der Kühlflüssigkeit verhindert wird, und einen Ventilkörper (12), gebildet der aus einem Element, das entlang einer Rotationsachse (Y - Y) lang gestreckt ist, ausgestattet mit einem Durchgangskanal (14), und einen Verschluss umfasst, aufgenommen in diesem Durchgangskanal (14), rotierenden um die Rotationsachse (Y - Y), wobei der Verschluss (30) einen aktiven Abschnitt (31) umfasst, der sich auf eine versetzte Weise in Bezug auf die Rotationsachse (Y - Y) dreht und dazu geeignet ist, in einer geschlossenen Stellung, den Durchfluss der Flüssigkeit durch den Kanal (14) zu blockieren.

2. Eine Ventilgruppe (10) nach Anspruch 1, wobei der aktive Abschnitt (31) zum dichtenden Eingriff mit dem Ventilkörper (12) geeignet ist, sodass der Durchfluss der Kühlflüssigkeit verhindert wird.

3. Eine Ventilgruppe (10) nach Anspruch 2, wobei die Ventilgruppe (10) eine Flachdichtung (50) umfasst, die zur Bildung einer Abdichtung zwischen dem aktiven Abschnitt (31) und dem Ventilkörper (12) geeignet ist.

4. Eine Ventilgruppe (10) nach Anspruch 3, wobei die genannte Flachdichtung (50) auf dem genannten aktiven Abschnitt (31) des Verschlusses (30) angebracht wird.

5. Eine Ventilgruppe (10) nach Anspruch 3, wobei die genannte Flachdichtung (50) auf dem Ventilkörper (12) zum Inneren des Kanals (14) hin positioniert wird.

6. Eine Ventilgruppe (10) nach irgendeinem der vorhergehenden Ansprüche, wobei der Ventilkörper (12) am Boden Folgendes umfasst: eine Platte (16), Seitenwände (18), die axial von der Platte (16) vorstehen, und ein rohrförmiges Kopfelement (20), das die Seitenwände (18) an der zur Platte (16) gegenüberliegenden Seite überragt und verbindet, wobei der Kanal (14) zwischen den genannten Seitenwänden (18) mit mindestens einer Eintrittsmündung (14') definiert wird, durch die die Kühlflüssigkeit in den Ventilkörper (12) eintritt, und mit mindestens einer Austrittsmündung (14"), durch die die Kühlflüssigkeit aus dem Ventilkörper (12) austritt, wobei der Verschluss (30) in der geschlossenen Stellung in der Nähe der mindestens einen Eintrittsmündung (14') oder der mindestens einen Austrittsmündung (14") positioniert ist.

7. Eine Ventilgruppe (10) nach Anspruch 6, wobei die Eintrittsmündung (14') und die Austrittsmündung (14") jeweils durch einen Eintrittsrand (141) und einen Austrittsrand (142) eingegrenzt werden, wobei der aktive Abschnitt (31) in der geschlossenen Konfiguration dazu geeignet ist, mit einem der Folgenden: mit dem genannten Eintritts- (141) oder Austrittsrand (142) in Eingriff zu gelangen.

8. Eine Ventilgruppe (10) nach irgendeinem der Ansprüche 6 oder 7, wobei der aktive Abschnitt (31) des Verschlusses (30) zur Eintrittsmündung (14') oder zur Austrittsmündung (14"), mit der er in Eingriff kommt, eine im Wesentlichen komplementäre Form aufweist.

9. Eine Ventilgruppe (10) nach irgendeinem der vorhergehenden Ansprüche, wobei der aktive Abschnitt (31) des Verschlusses (30) einen transversalen Querschnitt aufweist, der zur Rotationsachse (Y - Y) senkrecht steht, dessen Dicke variiert, und der einen hohen Rand (311) und einen scharfen Rand (312) identifiziert, wobei der hohe Rand (311) eine größere Dicke aufweist als der scharfe Rand (312).

10. Eine Ventilgruppe (10) nach irgendeinem der vorhergehenden Ansprüche, die des Weiteren Bewegungsmittel zur Bewegung des Verschlusses (30) umfasst, die Folgendes umfassen: eine mit dem Verschluss (30) verbundene Welle (40), einen exzentrisch mit der Welle (40) verbundenen Stift (44), der zum Beispiel auf einer Scheibe (42) positioniert ist, die auf der genannten Welle (40) befestigt ist.

11. Eine Pumpe (1) für einen Kühlkreislauf, insbesondere für Fahrzeuge, die einen Pumpenkörper (2) und einen Rotor (4) umfasst, der Kühlflüssigkeit durch einen Ansaugabschnitt ansaugt und die genannte Kühlflüssigkeit unter Druck an einen Zuführabschnitt schickt:
wobei im Pumpenkörper (2) eine stromabwärts des Rotors (4) angeordnete Zuführkammer (6) und ein mit der Zuführkammer (6) verbundener Zuführkanal (8) hergestellt werden, der mit dem Zuführabschnitt des Kühlkreislaufs verbindbar ist, einen Pumpengruppe (10) nach irgendeinem der vorhergehenden Ansprüche umfassend, wobei der Aufnahmeraum (200), der die genannte Pumpengruppe (10) enthält, zwischen der genannten Zuführkammer und dem genannten Zuführkanal (8) positioniert wird.

12. Eine Pumpe (1) nach Anspruch 11, die Betätigungsmittel umfasst, die dazu geeignet sind, auf den in der Pumpengruppe (10) enthaltenen Verschluss (30) zu wirken, um diesen von der geschlossenen Stellung in die offene Stellung zu überführen, in der sie den Durchfluss der Kühlflüssigkeit erlaubt, und umgekehrt.

13. Eine Pumpe (1) nach Anspruch 12, die eine Pumpengruppe nach Anspruch 10 umfasst, wobei die Betätigungsmittel einen Stab (46) umfassen, der auf Befehl verschiebbar ist, zum Beispiel mittels eines Stellantriebs, der mit dem Stift (44) auf schwenkbare Weise verbunden ist, sodass dieser Stift (44) entlang seiner exzentrischen Bewegungsbahn bewegt wird.

14. Eine Pumpe (1) nach Anspruch 8, die Erfassungsmittel umfasst, die dazu geeignet sind, einen betriebsbereiten bzw. funktionierenden Zustand des Fahrzeugs zu erfassen, zum Beispiel Wärme-Erfassungsmittel, die dazu geeignet sind, die Temperatur der Kühlflüssigkeit oder die Temperatur der Motorteile zu erfassen, und die operativ mit den Betätigungsmitteln verbunden werden, die, abhängig von dem was erfasst worden ist, den Verschluss (30) bewegen.

## Revendications

1. Groupe soupape (10) logeable de manière extractible dans un logement (200) d'un corps de pompe (2) d'une pompe (1) d'un circuit de refroidissement de véhicule, dans lequel le groupe soupape (10) a une configuration fermée dans laquelle le transit du liquide de refroidissement est empêché, et comprend un corps de soupape (12) formé d'un élément allongé le long d'un axe de rotation (Y-Y), équipé d'un conduit (14) traversant, et un obturateur (30) logé dans ledit conduit (14), tournant autour dudit axe de rotation (Y-Y), dans lequel l'obturateur comprend une partie active (31) tournant en décalage par rapport audit axe de rotation (Y-Y) et adaptée pour obstruer, dans une position fermée, le passage du liquide par le conduit (14).

2. Groupe soupape (10) selon la revendication 1, dans lequel la partie active (31) est adaptée pour s'engager hermétiquement dans le corps de soupape (12) de manière à bloquer le passage du liquide de refroidissement.

3. Groupe soupape (10) selon la revendication 2, dans lequel le groupe soupape (10) comprend un joint (50) adapté pour créer une étanchéité entre la partie active (31) et le corps de soupape (12).

4. Groupe soupape (10) selon la revendication 3, dans lequel ledit joint (50) est adapté sur ladite partie active (31) de l'obturateur (30).

5. Groupe soupape (10) selon la revendication 3, dans lequel ledit joint (50) est placé sur le corps de soupape (12), vers l'intérieur du conduit (14).

6. Groupe soupape (10) selon l'une quelconque des revendications précédentes, dans lequel le corps de soupape (12) comprend une plaque (16) située au niveau du fond, des parois latérales (18), s'élevant axialement depuis la plaque (16), et une tête tubulaire (20), qui surmonte les parois latérales et les unit (18) du côté opposé à la plaque (16), le conduit (14) étant défini entre lesdites parois latérales (18), avec au moins une bouche d'entrée (14'), par laquelle le liquide de refroidissement accède à l'intérieur du corps de soupape (12), et au moins une bouche de sortie (14") par laquelle le liquide de refroidissement sort de l'intérieur du corps de soupape (12), dans lequel l'obturateur (30), en position fermée, est placé à proximité de la bouche d'entrée (14') au nombre de une au moins, ou de la bouche de sortie (14") au nombre de une au moins.

7. Groupe soupape (10) selon la revendication 6, dans lequel la bouche d'entrée (14') et la bouche de sortie (14") sont délimitées respectivement par une bordure d'entrée (141) et une bordure de sortie (142), dans lequel la partie active (31) est adaptée, dans la configuration fermée, pour s'engager dans l'une desdites bordures d'entrée (141) ou de sortie (142).

8. Groupe soupape (10) selon l'une des revendications 6 ou 7, dans lequel la partie active (31) de l'obturateur (30) a une forme sensiblement complémentaire de celle de la bouche d'entrée (14') ou de la bouche de sortie (14") respective avec laquelle elle s'engage.

9. Groupe soupape (10) selon l'une quelconque des revendications précédentes, dans lequel la partie active (31) de l'obturateur (30) a une coupe transversale perpendiculaire à l'axe de rotation (Y-Y), d'épaisseur variable, identifiant une bordure haute (311) et une bordure aigüe (312), dans lequel la bordure haute (311) est plus épaisse que la bordure aigüe (312).

10. Groupe soupape (10) selon l'une quelconque des revendications précédentes, comprenant en outre des moyens de mise en mouvement, pour déplacer l'obturateur (30), qui comprennent un arbre (40) connecté à l'obturateur (30), une broche (44) connectée excentriquement à l'arbre (40), placée par exemple sur un disque (42) fixé sur ledit arbre (40).

11. Pompe (1) pour un circuit de refroidissement, en particulier pour des véhicules, comprenant un corps de pompe (2) et un rotor (4) qui aspire un liquide de refroidissement à travers une section d'aspiration et envoie ledit liquide de refroidissement, sous pression, dans une section de distribution ;
dans lequel, dans le corps de pompe (2), sont formées une chambre de distribution (6), placée en aval du rotor (4), et un conduit de distribution (8) connecté à la chambre de distribution (6), connectable à la section de distribution du circuit de refroidissement, comprenant un groupe soupape (10) selon l'une quelconque des revendications précédentes, dans lequel le logement (200) contenant ledit groupe soupape (10) est placé entre ladite chambre de distribution et ledit conduit de distribution (8).

12. Pompe (1) selon la revendication 11, comprenant des moyens d'actionnement adaptés pour agir sur l'obturateur (30), inclus dans le groupe soupape (10), pour le faire passer de la position fermée à la position ouverte, dans laquelle il permet le passage du liquide de refroidissement, et vice-versa.

13. Pompe (1) selon la revendication 12, comprenant un groupe soupape selon la revendication 10, dans laquelle les moyens d'actionnement comprennent une tige (46) déplaçable en translation sur commande, par exemple au moyen d'un actionneur, connectée à la broche (44) de manière pivotante, de manière à déplacer ladite broche (44) le long de sa trajectoire excentrique.

14. Pompe (1) selon la revendication 8, comprenant des moyens de détection adaptés pour détecter un état de fonctionnement du véhicule, par exemple des moyens de détection de chaleur adaptés pour détecter la température du liquide de refroidissement ou la température des pièces du moteur, connectés de manière opératoire au moyens d'actionnement qui, en fonction de ce qui est détecté par les moyens de détection, déplacent l'obturateur (30).
